# EUROPEAN PATENT SPECIFICATION

(11) **EP 1 302 072 B1**
(45) Date of publication and mention of the grant of the patent: **13.07.2011**
(21) Application number: 01905315.6
(22) Date of filing: 01.02.2001
(51) Int. Cl.: H04N 5/782

(54) **SYSTEMS AND METHODS FOR INCORPORATING PROMOTIONS WITHIN RECORDED PROGRAMS**
VORICHTUNGEN UND VERFAHREN ZUR EINBINDUNG VON WERBUNGEN IN AUFGEZEICHNETE PROGRAMME
SYSTEMES ET PROCEDES DIFFUSANT DES PROMOTIONS AVEC DES PROGRAMMES ENREGISTRES

(30) Priority: 01.02.2000 US 179548 P
(43) Date of publication of application: 16.04.2003
(73) Proprietor: United Video Properties, Inc., Santa Clara, CA 95050 (US)
(72) Inventor: CORVIN, Johnny, B., Jenks, OK 74037 (US); HEDGES, L., Joe, Tulsa, OK 74137 (US)
(74) Representative: Hibbert, Juliet Jane Grace
(86) International application number: PCT/US2001/003268
(87) International publication number: WO 2001/058154

(56) References cited:
- WO-A-99/04561

## Description

### Background of the Invention

This invention relates to recording of television programs. More particularly, this invention relates to promotional techniques used in conjunction with recording of television programs.

Since the advent of video cassette recording, individuals have had the opportunity to record television programs for their personal use. Traditionally, these recordings were on magnetic tape. More recently; personal video recording has developed to allow recording to be accomplished through the use of digital storage media.

In the past, visual advertisements have been highly effective in marketing goods and services. Thus, both advertisers and consumers alike may see advantages to incorporating promotional materials within recorded programs.

WO99/04561 discloses an electronic program guide in which it is possible to customise the presentation and/or scheduling of telecast advertisements that are viewable during the real time telecast of the television program. The advertisements can be customised to a viewer according to criteria such as geographical location, e.g. zip code. The disclosure also includes reference to 'Ad Windows' which can be populated with 'infomercials' that can be recorded by the viewer from the electronic program guide. The same Ad Window can be used promote a program for recording through the electronic program guide.

It is, therefore, an object of the invention to provide system and methods for providing promotions with recorded programs.

The method and system for providing promotions with recorded programs according to the invention are as defined in claims 1 and 16.

### Summary of the Invention

In accordance with this and other objects of the present invention, systems and methods for providing promotions with recorded programs are provided. These systems and methods may record promotional materials ("promotions") at the beginning, at the end, at the beginning and the end, or at any other point or points of a recording. For example, when a record feature of a program guide is selected to record a program, a promotion record feature may record a promotion (e.g., a movie preview) at the beginning, at the end, at the beginning and the end, or at any other point or points of the program that is to be recorded. The promotion may then be displayed to the user when the user plays the recorded program.

These systems and methods may also record programs and control the integration of selected promotions and recorded programs during playback of the recorded programs.

In one embodiment of the invention, a system may include: a transceiver that transmits and/or receives signals and/or data; a processor that selects a program, that selects a promotion, and that causes both the selected program and the selected promotion to be recorded; and a storage device or a plurality of storage devices for storing signals and/or data.

In another embodiment of the invention, a system may include a processor that selects a program, that selects a promotion, that causes the selected program to be recorded, and that controls the integration of the recorded program and the selected promotion during playback of the recorded program.

### Brief Description of the Drawings

The above and other objects and advantages of the invention will be apparent upon consideration of the following detailed description taken in conjunction with the accompanying drawings in which like reference characters refer to like parts throughout and in which:
FIG. 1 is a block diagram of a system that may be used to implement various embodiments of the present invention;
FIG. 2 is a block diagram of user equipment that may be used in accordance with various embodiments of the present invention;
FIG. 3 is a flow chart of a process in accordance with various embodiments of the present invention;
FIG. 4 is an illustration of an interactive program guide grid display that may be used to implement various embodiments of the present invention;
FIG. 5 is an illustration of an interactive program guide search-sort display that may be used to implement various embodiments of the present invention;
FIG. 6 is a flow chart of a process in which a promotion may be recorded at the beginning of a program and that may be used to implement various embodiments of the present invention;
FIG. 7 is a flow chart of a process in which a promotion may be recorded at any point during a program and that may be used to implement various embodiments of the present invention;
FIG. 8 is a flow chart of a process in which a promotion may be recorded at the end of a program and that may be used to implement various embodiments of the present invention;
FIG. 9 is a flow chart of a process in which a promotion may be recorded at the beginning and at the end of a program and that may be used to implement various embodiments of the present invention;
FIG. 10 is a flow chart of a process in which a promotion may be recorded at the beginning, at any point during, and at the end of a program and that may be used to implement various embodiments of the present invention; and
FIG. 11 is a flow chart of a process in which promotions may be integrated with the playback of a recorded program that may be used to implement various embodiments of the present.

### Detailed Description of the Preferred Embodiments

The present invention provides methods and systems for providing promotions with recorded programs.

In one embodiment of the invention, a system may include: a one or more receivers that receives signals and/or data; a processor that selects a program, that selects a promotion, and that causes both the selected program and selected promotion to be recorded; a storage unit or a plurality of storage units for storing signals and/or data; and a display for presenting the recorded programs and promotions to a viewer. The signals and data may be stored locally after being received until needed by the processor, may be available on-demand from a distribution facility, or may be periodically available on a video stream of a broadcast channel.

The transceiver may transmit and/or receive signals and/or data (e.g., programs, promotions, program guides, applications, URL addresses, etc). These signals and/or data may be transmitted and/or received by the user's equipment through any communications network (e.g., a cable system, a satellite system, a modem, wireless paging frequencies, the Internet, etc.). For example, a program may be received on a program channel and a promotion may be received through this program channel's vertical blanking interval (VBI). These signals and/or data may be transmitted and/or received by the user's equipment on one or a plurality of broadcast channels. For example, a program may be received on one channel and a promotion may be received on another channel.

The processor may select a program to record based on a user's input. A user's input may include the selection of a specific program. Alternatively, a user's input may be a user designation. The input of a user designation may cause a processor to perform an automatic search and a record function. A user designation may consist of a viewing time, a program channel, and/or specific program content (e.g., recommended audience ratings, date and/or time of telecast, and/or a program theme). The input of a designation may indicate to the processor to search for all programs that have a user specified theme. For example, a user may select "Westerns" as a desired program theme. The processor may then search for and select all programs that have a theme related to westerns (e.g., "Blazing Saddles," "City Slickers," "The Quick and The Dead," etc.) The processor may then cause these selected programs to be recorded. A designation may be entered by the user through an interactive program guide or an online program guide. Examples of such guides are provided by TV Guide and Gemstar Guide Plus. The program guide may include the ability to select from a menu of designation choices, the ability to accept direct input through text, or the ability to perform keyword searches. A user may submit a designation through a wire or wireless remote operating unit (e.g., a keyboard, a touch screen display, or any other processor input device).

The processor may select a promotion to record based on specific content of the selected program. For example, when a program with specific content is being recorded, the processor may select a promotion corresponding to the content of a program that is being recorded. The processor may determine a selected program's content from program guide data, from the program itself, from data accompanying the program, or from any other suitable source. The program guide data may be received prior to or concurrently with the program. Similarly, the processor may determine a promotion's content from promotion data accompanying the promotion, promotion data received separately from the promotion, from the promotion itself, or from any other suitable source. The content of a program or a promotion may be indicated by tags, thumbnails, closed-caption or teletext data, speech-to-text data recognition, audio classification (e.g., speech and music), clip markings, recommended audience ratings, program informational display screens, or any other information. Alternatively, the promotion may be unrelated to the program, and may be selected on the basis or time, user demographics, or any other criterion, or may be selected on a random basis.

The processor may then cause the selected program and the selected promotion to be recorded on storage media. The recording of a selected promotion may be at the beginning, at the end, at the beginning and at the end, or at any other desired point or points within a recorded program. The insertion of a selected promotion during the recording of a program may cause the processor to buffer all of or portions of a program in a storage unit. After the promotion is inserted, the processor may then cause the remaining portion of the program to be recorded from the storage unit. A program may indicate where a promotion is or promotions are to be inserted using one or more tagged promotion points within a program's signal or data. These promotion points may be located at the beginning, at the end, at the beginning and at the end, or at any other desired point or points within a program. For example, when recording multiple programs, one or more promotions may be recorded between the programs.

The storage unit or plurality of storage units may be used to store signals and data (e.g., programs, promotions, program guides and guide data, video recordings, and any other desired content and/or data).

Each storage unit may be located locally at or near a user's television viewing equipment (e.g., in the user's home or at a cable node near the user's home), or may be located remotely from the user's television viewing equipment such that the storing of programs, promotions, and data on the storage unit may be controlled by the processor over a communications network. If a storage unit is located locally, during playback, the processor may cause a program, promotion, or data to be retrieved from the storage unit and displayed to the user. If a storage unit is located remotely; during playback, the storage unit storage unit may transmit the program, promotion, and data over the communications network so that the program, promotion, or data can be displayed to the user.

In order to facilitate playback of recorded programs, an interactive user interface may be provided to enable a user to select recorded programs for playback. This interface may cause a flag to be recorded at the beginning of each portion of a storage medium. For example, with a video cassette, each time a recording is made, a flag may be recorded at the beginning of the recording. When a promotion is recorded at the beginning of a program, a flag may be recorded at the beginning of the promotion. The flag may then be used to identify the beginning of the program during subsequent playback. For example, when a list of previously recorded programs is presented to a user in an interactive user interface, upon the user selecting a program from the list, the invention may rewind or advance a storage medium, such as a video cassette, to the corresponding flag and playback the program until the next flag is detected.

In another embodiment of the invention, a system may include a processor that selects a program, that selects a promotion, that causes the program to be recorded, and that controls the integration of the recorded program and the selected promotion during playback of the selected program on a display.

The processor may select and record a program and select a promotion, as set forth in detail above. The processor may also control playback of a recorded program by inserting promotions at a promotion point during the playback of the selected program. The processor may determine promotion points using tags within a program's signal or data or using any other suitable method. The insertion of a selected promotion during playback of the recorded program may cause the processor to send, for example, a pause or stop command or signal to halt the playback of the recorded program. After, the promotion is inserted and played, the processor may then send a command or signal to continue the playback of the remaining portion or portions of the recorded program.

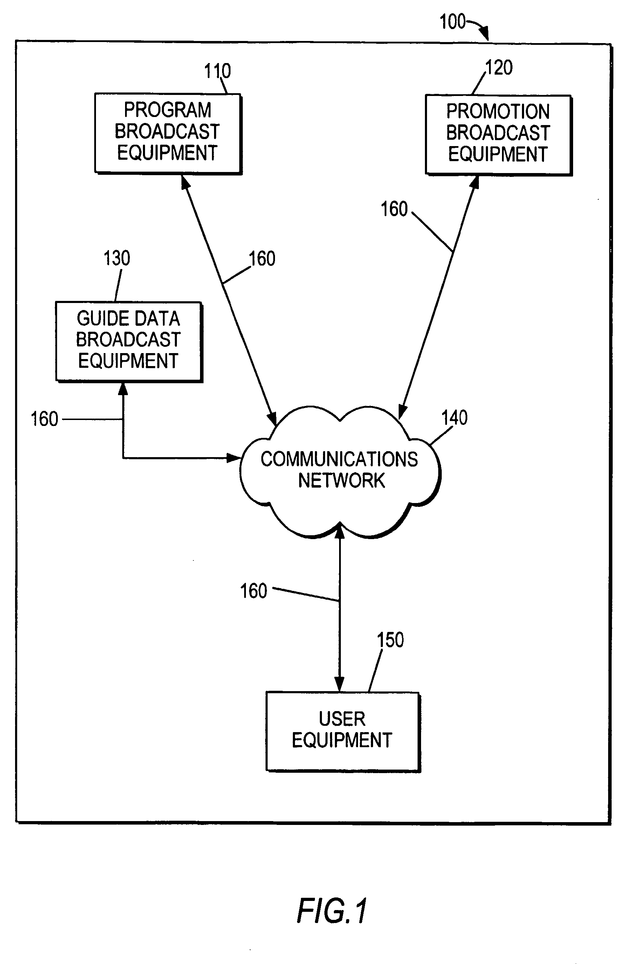

FIG. 1 is a block diagram of system 100 that may be used to implement various embodiments of the present invention. System 100 may comprise program broadcast equipment 110, promotion broadcast equipment 120, guide data broadcast equipment 130, communications network 140, user equipment 150, and communication links 160. Broadcast equipment 110, 120, and 130 may be any suitable equipment for providing program signals, promotion signals, program guide signals, and/or any other desired signals or data, such as video and data servers, live broadcast equipment, video tape players, etc., and may be located at a cable headend or at any other convenient location. In addition, broadcast equipment 110, 120, and 130 may be combined into a single broadcast unit.

Communication network 140 may be any suitable network for transmitting signals and/or data to and/or from broadcast equipment 110, 120, and 130. For example, network 140 may be the Internet, a satellite communications system, a cable system, a Local Area Network, a Wide Area Network, etc., or any combination of the same. Communication network 140 may use digital or analog technology or any combination thereof.

User equipment 150 may be any suitable equipment for receiving, processing and displaying signals and/or data received from and/or transmitted to broadcast equipment 110, 20, and 130. For example, user equipment 150 may be a one or two-way set-top box, a television with processing and recording capability, a personal video recorder, a video cassette recorder with suitable processing capabilities, a personal computer, etc.

Communication links 160 may be any suitable link for communicating data and/or signals, such as a dial-up connection, a fiber optic cable, a coax cable, a DSL connection, etc. or any combination of the same.

Although not shown in FIG. 1, system 100 may also include one or more remote storage units that may be used to store programs, promotions, and programs. These remote storage units may receive programs, promotions, and data from program broadcast equipment 110, promotion broadcast equipment 120, and guide data broadcast equipment 130, may be controlled by any of broadcast equipment 110, 120, and 130 and user equipment 150, and may provide the programs, promotions, and data to user equipment 150 via communications network 140.

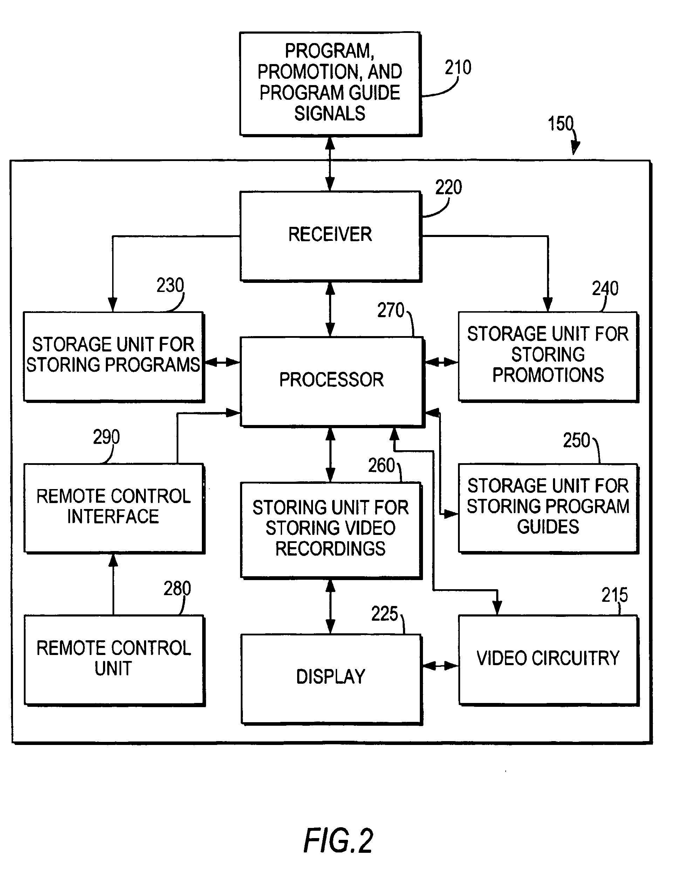

FIG. 2 is a block diagram of user equipment 150 shown in FIG. 1. User equipment 150 may be used in accordance with various embodiments of the present invention. User equipment 150 may include: a receiver 220; a processor 270; storage units 230, 240, 250, and 260; a remote control unit 280; a remote control interface 290, video circuitry 215, and a display 225. Receiver 220 may be any suitable equipment for receiving program signals, promotion signals, program guide data, and/or any other desired signals or data. Although not shown, receiver 220 may be supplemented with a transmitter for transmitting program signal, promotion signal, program guide data, and/or any other desired signals or data. Processor 270 may be any suitable equipment for accepting a user input signal, selecting a program, selecting a promotion, and causing a selected program and a selected promotion to be recorded. Storage units 230, 240, 250, and 260 may be used for storing programs, promotions, program guides, and recordings, respectively. Any of storage units 230, 240, 250, and 260 may be any devices that are capable of electronically storing signals and/or data (e.g., a separate video cassette recorder, a disk drive, a memory card, etc.). Storage units 230, 240, 250, and 260, if desired, may also be combined into a single storage unit. Remote control unit 280 may be a keyboard, a touch screen display, a front panel, or any other wired or wireless device that a user may use to input data. Remote control interface 290 receives a signal from remote control unit 280 and then sends that signal to processor 270. Remote control interface 290 may be, for example, a photo detector. Video circuitry 215 may be any suitable circuitry for converting data from processor 270 into video signals for display on display 225. Finally, display 225 may be any suitable device for presenting images to a viewer, such as a television, a monitor, a computer monitor, a personal data assistant, etc.

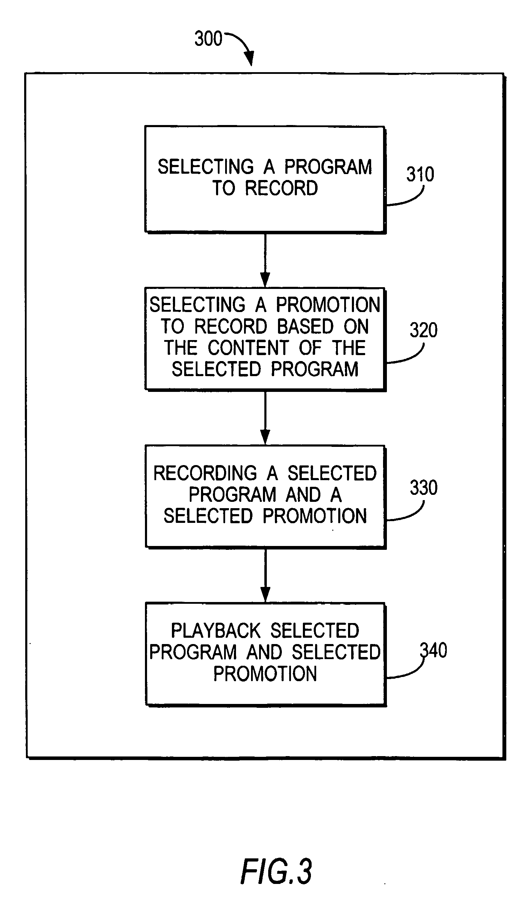

FIG. 3 is a flow chart of a process 300 in accordance with various embodiments of the present invention. As illustrated, at step 310, process 300 may begin by selecting a program to record. As mentioned above, selecting may be based on a particular selection of a program by a user or on a selection of a theme, or other designation, by the user. Next at step 320, process 300 may select a promotion to record. The selection of a promotion may be based upon the content of the program to be recorded. Alternatively, the promotion selection may be made independently of the content of the program to be recorded. Finally, at step 330, process 300 may record a selected program and a selected promotion. The selected program and the selected promotion may be recorded to any suitable storage unit such as a separate video cassette recorder, a disk drive, or a memory card, etc. As stated above, the storage unit may be located locally at or near a user's television viewing equipment, or may be located remotely from the user's television viewing equipment. Finally, at step 340, the program and promotion may be played back on a display at a user's request.

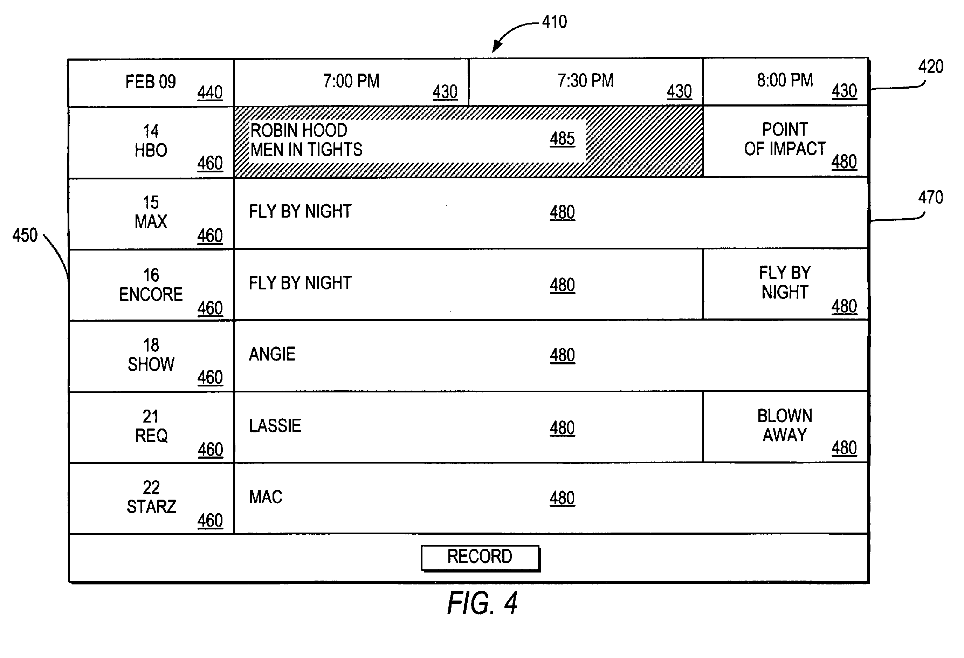

FIG. 4 is an illustration of an interactive program guide grid display screen 410 that may be used to select a program to record in various embodiments of the present invention. Screen 410 may include a time bar 420 that may be divided into a plurality of horizontally arranged time cells 430 and a date cell 440. Each time cell 430 may correspond to a one half hour time period (or any other suitable period) of television programming. Date cell 440 identifies the telecast date for the television programs identified in display screen 410. Screen 410 may also include channel bar 450 that is divided into a plurality of vertically arranged channel cells 460. Channel cells 460 may identify the channels on which the displayed programs are to be (or are being) telecast. Screen 410 may further include program grid 470.

Program grid 470 may be divided into a plurality of program cells 480. Each program cell 480 may contain a particular television program name and may be selectable. The width of each cell may correspond to the length of the corresponding program. A program in cell 485 may be selected to record by highlighting the cell using arrow keys on remote control unit 280 and pressing a record key on the remote control.

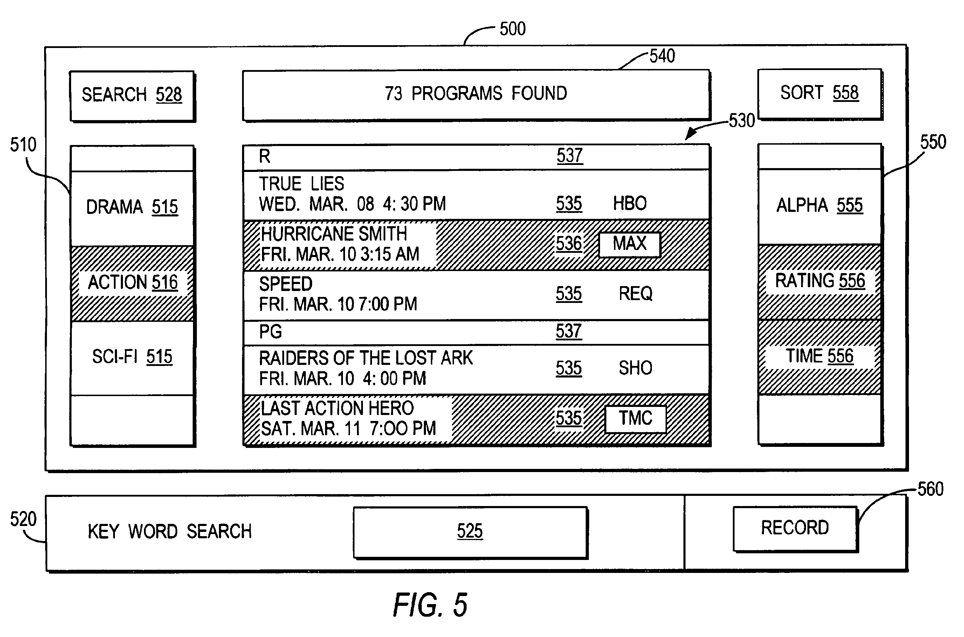

Turning now to FIG. 5, a program designation screen 500 that may be used to designate programs to record by theme and/or key word is described. Program designation screen 500 may include theme selection menu 510 and key word search menu 520. Menus 510 and 520 may allow a user to define program search criteria. Theme selection menu 510 may include theme selection cells 515 and 516 that may be individually selectable and that may allow a user to search for programs containing a specific theme. Theme Cell 516 depicts a selected theme cell. Key word search menu 520 may include a key word search cell 525 that allows a user to enter alphanumeric text to search for specific content of a program. Menus 510 and 520 may be used in conjunction or separately. Search cell 528 may be used to initiate a user's program search.

Screen 500 may also include a program list 530 that displays the results of a user's program search. Program list 530 may include program cells 535 and 536 that display program information. One or more program cells may be automatically selected based upon the theme or search term selected, as shown by selected program cells 536. Record button 560 may be used to initiate recording. Program list 530 may also include program rating cells 537 that categorize program cells according to their rating (e.g., G, PG, PG-13, R).

Program list 530 may further include a program list header 540 that identifies the number of programs that meet the program search selection criteria.

In addition, program designation screen 500 may also include a sort menu 550 that enables a user to sort programs that have met the program search criteria and that are displayed in program list 530. Sort menu 550 may include sort cells 555 and 556 that allow the user to select a sorting technique. For example, programs that meet a user's search criteria may be sorted by viewing time, by rating, by alphabetically arranging, etc. One or more sort cells may be selected, as shown by selected sort cells 556. Sort activation cell 558 may be used to initiate the user's selected sorting techniques.

Screens 410 and 500 are merely illustrative of screens and methods that may be used to designate programs to be recorded. Any suitable screens and methods may be used in accordance with the present invention.

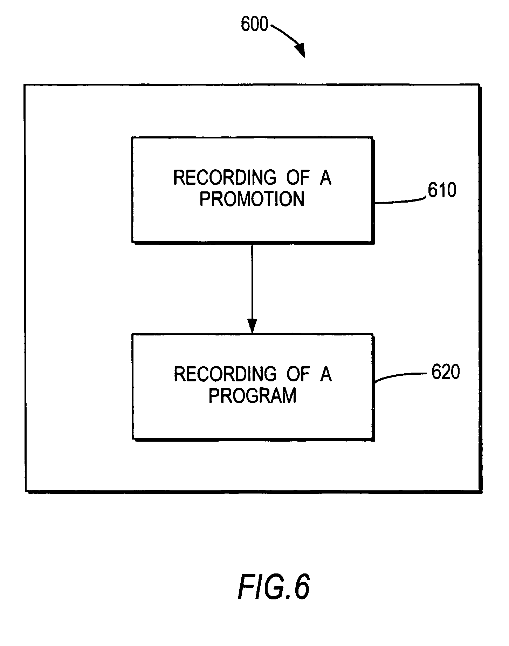

FIG. 6 is a flow chart of a process 600 in which a promotion may be recorded at the beginning of a program and that may be used to implement various embodiments of the present invention. Process 600 shows promotion recording at step 610 prior to beginning recording of a selected program at step 620.

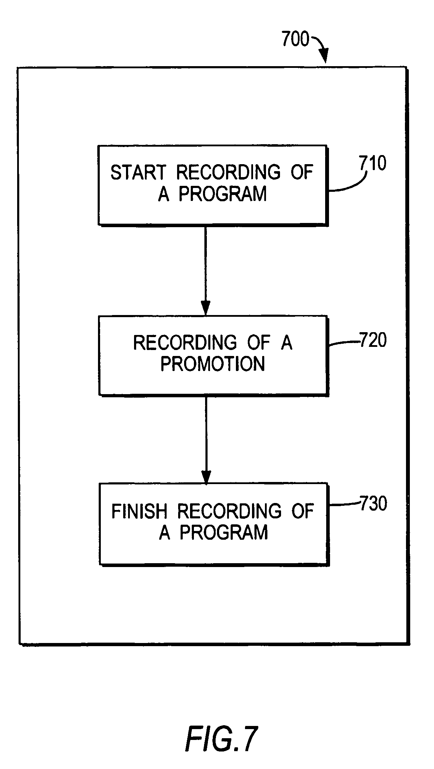

FIG. 7 is a flow chart of a process 700 in which a promotion may be recorded at a point during a program and that may be used to implement various embodiments of the present invention. Process 700 shows the start of program recording at step 710, the recording of a promotion at a point during program recording at step 720, and the finishing of program recording at step 730.

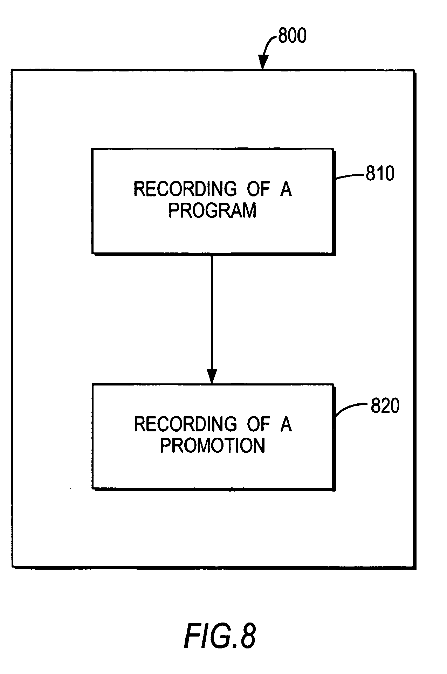

FIG. 8 is a flow chart of a process 800 in which a promotion may be recorded at the end of a program and that may be used to implement various embodiments of the present invention. Process 800 shows the recording of a program at step 810 and the recording of a promotion at step 820 at the end of program recording.

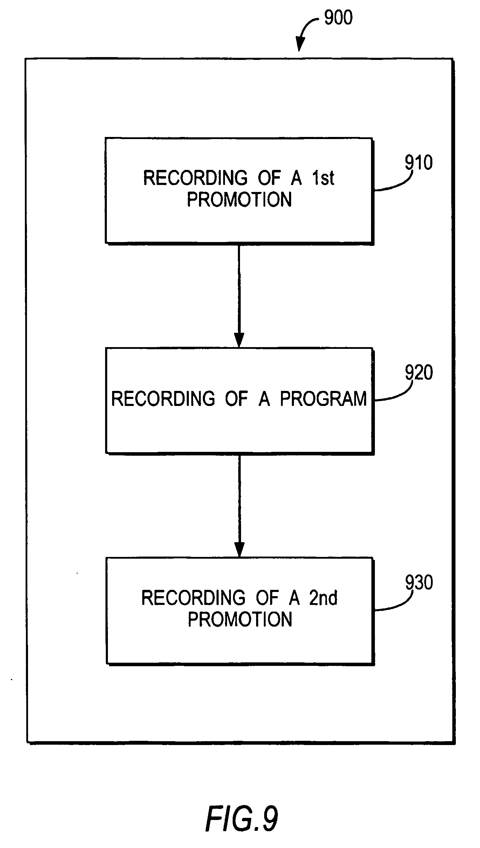

FIG. 9 is a flow chart of a process 900 in which a promotion may be recorded at the beginning and at the end of a program and that may be used to implement various embodiments of the present invention. Process 900 shows recording a first promotion at step 910 at the beginning of program recording, the recording of a program at step 920, and the recording of a second promotion at step 930.

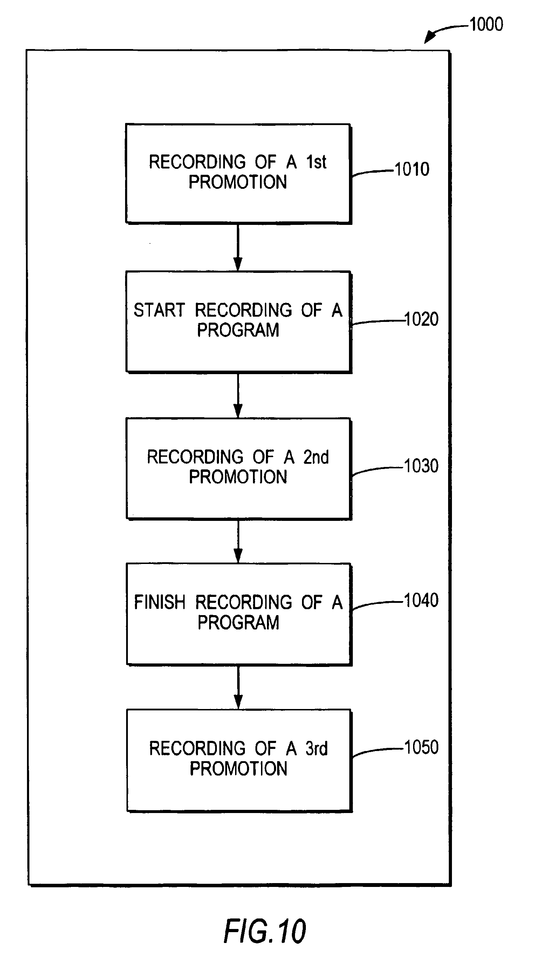

FIG. 10 is a flow chart of a process 1000 in which a promotion may be recorded at the beginning, at a point during, and at the end of a program and that may be used to implement various embodiments of the present invention. Process 1000 shows recording of a first promotion at step 1010 at the beginning of a program, recording of a first portion of the program at step 1020, recording of a second promotion at step 1030 at a point during the program, recording of a second portion of the program at step 1040, and recording of a third promotion at step 1050 at the end of the program.

Processes 600, 700, 800, 900, and 1000 may be used in any suitable combination to record multiple promotions before, during, and/or after a program.

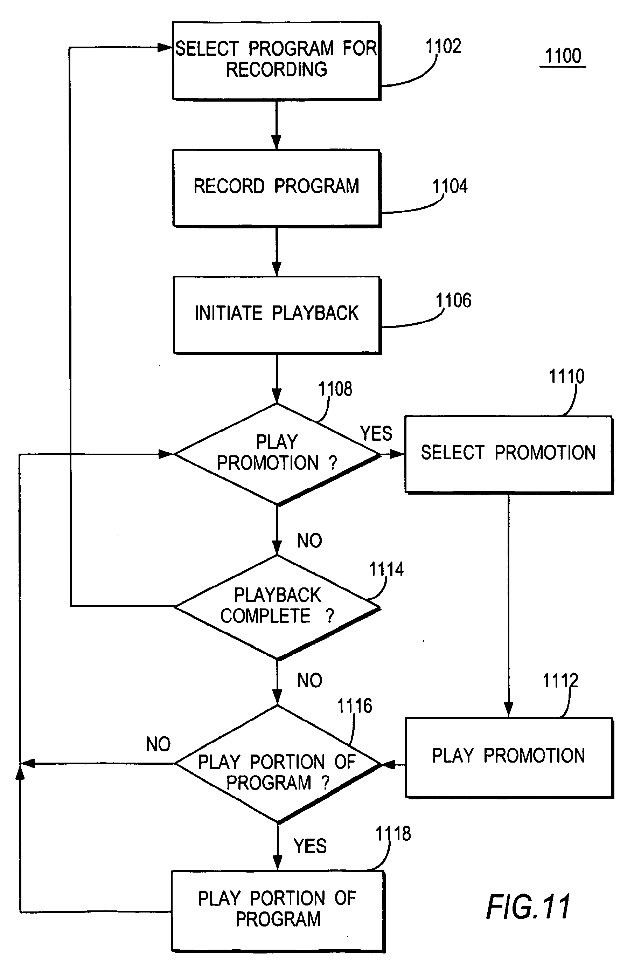

FIG. 11 illustrates a process 1100 for integrating promotions during the playback of a recorded program that may be used to implement various embodiments of the present invention. As shown, at step 1102, process 1100 may begin by selecting a program for recording. Selecting a program for recording may be performed in any suitable manner, such as those described in connection with FIGS. 4 and 5. Next at step 1104, process 1100 may record the program. At any point after beginning recording of a program, even before a program has completed recording, playback of the program may be initiated at step 1106. Preferably, playback is initiated in response to a command from a user, however, playback may be initiated automatically.

Next, at test 1108, process 1100 may determine whether to play a promotion. Determining whether to play a promotion may be made using any suitable criterion. If a promotion is to be played, process 1100 may next play the promotion at step 1112. If a promotion is not to be played, however, process may determine whether playback is complete at test 1114. If play back is complete, then process 1100 may loop back to step 1102 to wait for another program to be selected for recording.

If the playback is determined not to be complete at test 1114, or after playing a promotion at step 1112, process 1100 determines whether to play a portion of the program at test 1116. If a portion of the program (such as a first half of the program, a second half program, the whole program, or any other portion of the program) is to be played, process 1100 plays the portion at step 1118. Once the portion has been played at step 1118, or if it is determined that no portion is to be played at test 1116, then process 1100 loops back to test 1108.

Thus, systems and methods for providing promotions with recorded programs are provided. Persons skilled in the art will appreciate that the present invention can be practiced by other than the described embodiments, which are presented for purposes of illustration rather than of limitation, and that the present invention is limited only by the claims that follow.

## Claims

1. A method for providing promotions witch recorded programs comprising:
receiving (210) a selected program to record at a user input device;
using a processor to determine whether the selected program is to be recorded;
in response to determining whether the selected program is to be recorded, the processor:
selects (320) a promotion to record for inclusion with the selected program; and
causes (330) the program and the promotion to be recorded such that the promotion is presented when a user plays the recorded program.

2. The method of claim 1 wherein the promotion is selected based upon the content of the program.

3. The method of claim 1 wherein the program is selected based on user input.

4. The method of claim 3 wherein the user input is a selection (310) of a specific program.

5. The method of claim 3 wherein the user input is a program designation.

6. The method of claim 1 further comprising causing the promotion to be integrated at the beginning (610) of the selected program.

7. The method of claim 1 further comprising causing
the promotion to be integrated at the end (620) of the selected program.

8. The method of claim 1 further comprising causing promotions to be integrated at the beginning (1010) and the end (1050) of the selected program.

9. The method of claim 1 further comprising causing the promotion to be integrated at any desired point within the selected program.

10. The method of claim 1 further comprising receiving program guide data (210).

11. The method of claim 10 wherein the program and the promotion are received on a single broadcast channel.

12. The method of claim 10 wherein the program and the promotion are received on a plurality of broadcast channels

13. The method of claim 10 further comprising storing (230, 240, 250) the program, the promotion, and the program guide data.

14. The method of claim 13 wherein the program, the promotion, and the program guide data are stored on a storage
unit.

15. The method of claim 13 wherein the program, the promotion, and the program guide data are stored on a plurality of storage units.

16. A system for providing promotions with recording programs comprising:
a user input device that receives a selected program to record, and
a processor that determines whether the selected program is to be recorded, and in response to determining whether the selected program is to be recorded selecting a promotion to be recorded for inclusion with the selected program and causing the program and the promotion to be recorded such that the promotion is presented when a user plays the recorded program.

17. The system of claim 16 wherein the processor selects the promotion based upon the content of the program.

18. The system of claim 16 wherein the processor selects the program to be recorded based on the user input.

19. The system of claim 16 wherein the processor integrates the promotion at the beginning of the selected program.

20. The system of claim 16 wherein the processor integrates the promotion at the end of the selected program.

21. The system of claim 16 wherein the processor integrates promotions at the beginning and at the end of the selected program.

22. The system of claim 16 wherein the processor integrates the promotion at any desired point within the
selected program.

23. The system of claim 16 further comprising a receiver that receives signals and data.

24. The system of claim 23 wherein the receiver receives signals and data on a single broadcast channel.

25. The system of claim 23 wherein the receiver receives signals and data on a plurality of broadcast channels.

26. The system of claim 16 further comprising a storage unit that stores the program and the promotion

## Patentansprüche

1. Verfahren, um bei aufgezeichneten Programmen Werbung bereitzustellen, umfassend:
Empfangen (210) eines ausgewählten Programms zur Aufzeichnung auf einem Benutzereingabegerät;
Verwenden eines Prozessors zum Bestimmen, ob das ausgewählte Programm aufgezeichnet werden soll;
in Reaktion auf die Bestimmung, ob das ausgewählte Programm aufgezeichnet werden soll:
wählt (320) der Prozessor eine aufzuzeichnende Werbung aus, um sie im ausgewählten Programm einzufügen; und
veranlasst (330) der Prozessor, dass das Programm und die Werbung so aufgezeichnet werden, dass die Werbung gezeigt wird, wenn ein Benutzer das aufgezeichnete Programm abspielt.

2. Verfahren nach Anspruch 1, wobei die Werbung basierend auf dem Inhalt des Programms ausgewählt wird.

3. Verfahren nach Anspruch 1, wobei das Programm basierend auf einer Benutzereingabe ausgewählt wird.

4. Verfahren nach Anspruch 3, wobei die Benutzereingabe eine Auswahl (310) eines speziellen Programms ist.

5. Verfahren nach Anspruch 3, wobei die Benutzereingabe eine Programmbezeichnung ist.

6. Verfahren nach Anspruch 1, ferner umfassend das Veranlassen, dass die Werbung am Anfang (610) des ausgewählten Programms eingefügt wird.

7. Verfahren nach Anspruch 1, ferner umfassend das Veranlassen, dass die Werbung am Ende (620) des ausgewählten Programms eingefügt wird.

8. Verfahren nach Anspruch 1, ferner umfassend das Veranlassen, dass Werbungen am Anfang (1010) und am Ende (1050) des ausgewählten Programms eingefügt werden.

9. Verfahren nach Anspruch 1, ferner umfassend das Veranlassen, dass die Werbung an einer gewünschten Stelle innerhalb des ausgewählten Programms eingefügt wird.

10. Verfahren nach Anspruch 1, ferner umfassend das Empfangen von Programmführungsdaten (210).

11. Verfahren nach Anspruch 10, wobei das Programm und die Werbung auf einem einzelnen Rundfunkkanal empfangen werden.

12. Verfahren nach Anspruch 10, wobei das Programm und die Werbung auf einer Vielzahl von Rundfunkkanälen empfangen werden.

13. Verfahren nach Anspruch 10, ferner umfassend das Speichern (230, 240, 250) des Programms, der Werbung und der Programmführungsdaten.

14. Verfahren nach Anspruch 13, wobei das Programm, die Werbung und die Programmführungsdaten auf einer Speichereinheit gespeichert werden.

15. Verfahren nach Anspruch 13, wobei das Programm, die Werbung und die Programmführungsdaten auf einer Vielzahl von Speichereinheiten gespeichert werden.

16. System zum Bereitstellen von Werbungen beim Aufzeichnen von Programmen, umfassend:
ein Benutzereingabegerät, welches ein ausgewähltes aufzuzeichnendes Programm empfängt, und
einen Prozessor, der bestimmt, ob das ausgewählte Programm aufgezeichnet werden soll, und in Reaktion auf die Bestimmung, ob das ausgewählte Programm aufgezeichnet werden soll, Auswählen einer aufzuzeichnenden Werbung zum Einfügen in das ausgewählte Programm und Veranlassen, dass das Programm und die Werbung so aufgezeichnet werden, dass die Werbung gezeigt wird, wenn ein Benutzer das aufgezeichnete Programm abspielt.

17. System nach Anspruch 16, wobei der Prozessor die Werbung basierend auf dem Inhalt des Programms auswählt.

18. System nach Anspruch 16, wobei der Prozessor das aufzuzeichnende Programm basierend auf der Eingabe des Benutzers auswählt.

19. System nach Anspruch 16, wobei der Prozessor die Werbung am Anfang des ausgewählten Programms einfügt.

20. System nach Anspruch 16, wobei der Prozessor die Werbung am Ende des ausgewählten Programms einfügt.

21. System nach Anspruch 16, wobei der Prozessor Werbungen am Anfang und am Ende des ausgewählten Programms einfügt.

22. System nach Anspruch 16, wobei der Prozessor die Werbung an einer gewünschten Stelle des ausgewählten Programms einfügt.

23. System nach Anspruch 16, ferner umfassend einen Empfänger, der Signale und Daten empfängt.

24. System nach Anspruch 23, wobei der Empfänger Signale und Daten auf einem einzelnen Rundfunkkanal empfängt.

25. System nach Anspruch 23, wobei der Empfänger Signale und Daten auf einer Vielzahl von Rundfunkkanälen empfängt.

26. System nach Anspruch 16, ferner umfassend eine Speichereinheit, welche das Programm und die Werbung speichert.

## Revendications

1. Procédé destiné à fournir des promotions avec des émissions enregistrées, comprenant les étapes consistant à :
recevoir (210) une émission sélectionnée pour l'enregistrement à un dispositif d'entrée utilisateur ;
utiliser un processeur pour déterminer si l'émission sélectionnée doit être enregistrée ;
en réponse au fait de déterminer si l'émission sélectionnée doit être enregistrée, le processeur :
sélectionne (320) une promotion à enregistrer pour être incluse avec l'émission sélectionnée ; et
fait en sorte (330) que l'émission et la promotion soient enregistrées de sorte que la promotion soit présentée lorsqu'un utilisateur regarde l'émission enregistrée.

2. Procédé selon la revendication 1, dans lequel la promotion est sélectionnée sur la base du contenu de l'émission.

3. Procédé selon la revendication 1, dans lequel l'émission est sélectionnée sur la base d'une entrée utilisateur.

4. Procédé selon la revendication 3, dans lequel l'entrée utilisateur est une sélection (310) d'une émission spécifique.

5. Procédé selon la revendication 3, dans lequel l'entrée utilisateur est une désignation d'émission.

6. Procédé selon la revendication 1, comprenant en outre l'étape consistant à faire en sorte que la promotion soit intégrée au début (610) de l'émission sélectionnée.

7. Procédé selon la revendication 1, comprenant en outre l'étape consistant à faire en sorte que la promotion soit intégrée à la fin (620) de l'émission sélectionnée.

8. Procédé selon la revendication 1, comprenant en outre l'étape consistant à faire en sorte que des promotions soient intégrées au début (1010) et à la fin (1050) de l'émission sélectionnée.

9. Procédé selon la revendication 1, comprenant en outre l'étape consistant à faire en sorte que la promotion soit intégrée à un point sélectionné quelconque au sein de l'émission sélectionnée.

10. Procédé selon la revendication 1, comprenant en outre l'étape consistant à recevoir des données de programme d'émissions (210).

11. Procédé selon la revendication 10, dans lequel l'émission et la promotion sont reçues sur une chaîne de diffusion unique.

12. Procédé selon la revendication 10, dans lequel l'émission et la promotion sont reçues sur une pluralité de chaînes de diffusion

13. Procédé selon la revendication 10, comprenant en outre l'étape consistant à stocker (230, 240, 250) l'émission, la promotion, et les données de programme d'émissions.

14. Procédé selon la revendication 13, dans lequel l'émission, la promotion, et les données de programme d'émissions sont stockées sur une unité de stockage.

15. Procédé selon la revendication 13, dans lequel l'émission, la promotion, et les données de programme d'émissions sont stockées sur une pluralité d'unités de stockage.

16. Système destiné à fournir des promotions avec des émissions d'enregistrement, comprenant :
un dispositif d'entrée utilisateur qui reçoit une émission sélectionnée pour l'enregistrement, et
un processeur qui détermine si l'émission sélectionnée doit être enregistrée, et, en réponse au fait de déterminer si l'émission sélectionnée doit être enregistrée, sélectionne une promotion à enregistrer pour être incluse avec l'émission sélectionnée et fait en sorte que l'émission et la promotion soient enregistrées de sorte que la promotion soit présentée lorsqu'un utilisateur regarde l'émission enregistrée.

17. Système selon la revendication 16, dans lequel le processeur sélectionne la promotion sur la base du contenu de l'émission.

18. Système selon la revendication 16, dans lequel le processeur sélectionne l'émission à enregistrer sur la base de l'entrée utilisateur.

19. Système selon la revendication 16, dans lequel le processeur intègre la promotion au début de l'émission sélectionnée.

20. Système selon la revendication 16, dans lequel le processeur intègre la promotion à la fin de l'émission sélectionnée.

21. Système selon la revendication 16, dans lequel le processeur intègre des promotions au début et à la fin de l'émission sélectionnée.

22. Système selon la revendication 16, dans lequel le processeur intègre la promotion à un point sélectionné quelconque au sein de l'émission sélectionnée.

23. Système selon la revendication 16, comprenant en outre un récepteur qui reçoit des signaux et des données.

24. Système selon la revendication 23, dans lequel le récepteur reçoit des signaux et des données sur une chaîne de diffusion unique.

25. Système selon la revendication 23, dans lequel le récepteur reçoit des signaux et des données sur une pluralité de chaînes de diffusion.

26. Système selon la revendication 16, comprenant en outre une unité de stockage qui stocke l'émission et la promotion.
